# EUROPÄISCHE PATENTSCHRIFT

(11) **EP 0 719 302 B1**
(45) Veröffentlichungstag und Bekanntmachung des Hinweises auf die Patenterteilung: **09.06.1999**
(21) Anmeldenummer: 94924306.7
(22) Anmeldetag: 02.08.1994
(51) Int. Cl.: C08L 95/00, C08J 11/00, E01C 7/18

(54) **LACKKOAGULAT-RECYCLING IM STRASSENBAU**
RECYCLING OF VARNISH COAGULATE IN ROAD CONSTRUCTION
RECYCLAGE DE COAGULATS DE VERNIS EN CONSTRUCTION ROUTIERE

(30) Priorität: 02.08.1993 DE 4325857
(43) Veröffentlichungstag der Anmeldung: 03.07.1996
(73) Patentinhaber: Dynamit Nobel Kunststoff GmbH, 91781 Weissenburg (DE); Zeller + Gmelin GmbH & Co, 73054 Eislingen (DE)
(72) Erfinder: HERRMANN, Karl, D-91757 Treuchtlingen (DE); SCHLIPF, Michael, D-73035 Göppingen (DE)
(74) Vertreter: Uppena, Franz, Dr.
(86) Internationale Anmeldenummer: EP9402551
(87) Internationale Veröffentlichungsnummer: WO9504110

(56) Entgegenhaltungen:
- DE-A- 2 919 941
- DE-A- 3 936 974
- PATENT ABSTRACTS OF JAPAN vol. 008, no. 056 (C-214) 14. März 1984 & JP,A,58 213 047 (NISSAN JIDOSHA KK) 10. Dezember 1983
- PATENT ABSTRACTS OF JAPAN vol. 007, no. 235 (C-191) 19. Oktober 1983 & JP,A,58 127 759 (NISSAN JIDOSHA KK) 29. Juli 1983
- DATABASE WPI Section Ch, Week 7715, Derwent Publications Ltd., London, GB; Class G02, AN 77-25853Y & JP,A,52 026 531 (KANSAI PAINT KK) 28. Februar 1977

## Beschreibung

Die Erfindung betrifft ein Verfahren zur Herstellung von Straßenbelägen auf Bitumenbasis, die Verwendung von Lackkoagulaten als Zusatz von Straßenbelägen auf Bitumenbasis, sowie verbesserte Straßenbeläge.

Straßenbeläge auf der Basis von Bitumen leiden im allgemeinen unter dem Nachteil, daß sie bei hohen Temperaturen, beispielsweise bereits bei sommerlichen Temperaturen, erweichen und unter Belastung zu Deformationen neigen. Die Folge sind zum Beispiel sogenannte Spurrillen.

Eine Aufgabe der vorliegenden Erfindung bestand darin, Strassenbeläge auf bituminöser Basis zu verbessern.

Gelöst wurde diese Aufgabe durch die im Anspruch 1 enthaltenen Merkmale. Überraschenderweise wurde festgestellt, daß sich Straßenbeläge verbessern lassen, wenn dem Bitumen sogenannte Lackkoagulate beigemischt werden. Bei der Lackierung von Werkstücken wird der Lacknebel, der nicht auf dem Werkstück haften bleibt, der sogenannte "Overspray", beispielsweise in wasserberieselten Lackieranlagen mit Wasser ausgewaschen. Dieser als Lackkoagulat bezeichnete Abfall besteht je nach eingesetztem Lacktyp aus verschiedenen Lackinhaltsstoffen, u.a. aus Lackbindemitteln, Wasser und Hilfsmitteln, die zur Entklebung des Lackes eingesetzt werden. Die Entsorgung dieses Lackkoagulats geschieht bisher z.B. als Sondermüll und als Ersatzbrennstoff beispielsweise in Zementwerken. Andere Verwertungsmöglichkeiten sehen die Aufarbeitung und anschließende Wiederverwertung des Lackkoagulats im Orginallack vor (EPA 0 488 449). In der EPA 0 402 573 wird das Lackkoagulat in einem ersten Schritt thermisch getrocknet, wodurch die in dem Koagulat enthaltenen Bindemittel polymerisieren. Nach der Trocknung des erhaltenen Materials wird es granuliert und in Dämmplatten als inertes Füllmaterial eingesetzt. In der DE-OS 40 34 596 wird das Lackkoagulat vor der Verwendung in einem energetisch aufwendigen Prozeß tiefgefroren, anschließend gemahlen und als Zuschlags- oder Füllstoff in Lacken und Farben, Baumaterialien, Dichtmaterialien, Unterbodenschutzmassen oder Klebstoffen eingesetzt. Die JP-A-52 026 531 (Zusammenfassung) offenbart eine Zusammensetzung, die 5 bis 95 Gew.-% eines durch Auswaschen nach einer Lackbeschichtung erhaltenen Lackes und Bitumen enthält. Die Druckschrift DE-OS-39 36 974 offenbart eine Mischung aus Lackkoagulat und Bitumen, die zu formbeständigen Gegenständen verarbeitet werden soll. Eine Verwendung von Lackkoagulaten in Straßenbelägen auf Bitumenbasis ist dem Stand der Technik nicht zu entnehmen; sie wird auch nicht nahegelegt. Der erfindungsgemäße Einsatz solcher Lackkoagulate in bituminösen Straßenbelägen stellt eine alternative, wirtschaftlich sinnvolle Verwertungsmöglichkeit dar. Eine Verwertungsmöglichkeit für Lackkoagulate bestehend aus Lösemittellacken oder Wasserlacken oder Mischungen aus solchen Lacken, bei der die wertvollen Eigenschaften der in dem Koagulat enthaltenen Lackbindemittel ausgenutzt werden.

Gegenstand der vorliegenden Erfindung ist daher neben der Bereitstellung verbesserter Straßenbeläge ein Verwertungsverfahren für Lackkoagulate.

Je nachdem welche Lackfarben und/oder welche Lacktypen bei der Lackierung von Werkstücken eingesetzt werden, ist das Lackkoagulat unterschiedlich zusammengesetzt; immer enthält es jedoch Lackbindemittel, die thermisch, physikalisch oder chemisch zur Polymerisation angeregt werden können. Erfindungsgemäß eingesetzt werden können Lackkoagulate, die als Lackbindemittel solche enthalten, die thermisch, physikalisch oder chemisch reagieren und die beispielsweise bei Lacken verwendet werden, die als organische Bestandteile beispielsweise Melaminharz, Polyester, Alkydharz oder Acrylat enthalten, beispielsweise Einbrennlacke oder Primer-, Deck- und Basislacke, die zur Lackierung in der Automobilindustrie und Automobilzulieferindustrie verwendet werden oder physikalisch trocknende oder chemisch reagierende Lackbindemittel, die beispielsweise bei 2-K-Systemen wie Polyester, Polyol, Polyurethan mit entsprechenden Polyisocyanathärtern oder in feuchtigkeitshärtenden oder säurehärtenden Polyurethanlacken oder in Epoxysystemen eingesetzt werden, beispielsweise als Lacke für Lederfinish oder als Primer-, Deck- und Klarlacke, die zur Lackierung in der Automobil- und Automobilzulieferindustrie, vorzugsweise zur Lackierung von Kunststoffen verwendet werden. Besonders bevorzugt sind Lackkoagulate, die Polyurethane, insbesondere aliphatisch vernetzte Polyurethane und/oder Polyurethanbindemittel enthalten. Die Lackbindemittel bilden beim Trocknungsprozeß eine Art inneres Netzwerk im Bitumen, das zur Stabilisierung führt. Die Koagulate können getrocknet in Mengen von 0,1 bis 30 Gew.%, vorzugsweise in Mengen von 1 bis 20 Gew.% dem Bitumen zugesetzt werden oder in trockener oder wasserfeuchter Form mit Wassergehalten von bis zu 60 Gew.% vorzugsweise von bis zu 40 Gew.%, in Mengen von 0,1 bis 30 Gew.% in der Mischanlage dem Gestein bzw. dem Aufbruchasphalt entweder vor dem Trocknungsofen oder direkt dem Mischer zugegeben werden, in dem auch die weiteren Komponenten, wie beispielsweise neues Gestein, Füller und Bitumen zu einem homogenen Straßenbelag gemischt werden. In diesen Fällen werden vorzugsweise Mengen von 1 bis 20 Gew.%, bezogen auf die Gesamtmenge, zugeschlagen.

Es konnte festgestellt werden, daß Lackkoagulate, die aus anorganischen Pigment/ Hilfsmittelanteilen und aus organischen Bestandteilen und Lackbindemitteln bestehen, proportional zum anorganischen Anteil unterschiedliche Einflüsse auf Straßenbeläge haben. Bei hohem Anteil von anorganischen Stoffen gleicht das Verhalten inerten Kalksteinfüllem. Die mit solchen Lackkoagulaten erhaltenen Straßenbeläge weisen daher nur unwesentlich verbesserte Eigenschaften auf.

Bei Zugabe von Lackkoagulaten mit hohem organischen Anteil, beispielsweise von 30 bis 100 Gew.%, vorzugsweise 60 bis 90 Gew.%, bezogen auf das Trockengewicht, erfolgt eine Versteifung von Straßenbelägen, wie sie z.B. mit Kalksteinfüller nicht erreicht werden kann. Eine starke Versteifung des Straßenbelags kann mit solchen Lackkoagulaten schon bei geringen Zusätzen von bis zu 20 Gew.%, vorzugsweise von 1 bis 10 Gew.%, bezogen auf das Trockengewicht, erreicht werden. Gleichzeitig verbessert sich die Verdichtbarkeit des Belages d.h. das Hohlraumvolumen nimmt ab.

Die erfindungsgemäßen Straßenbeläge weisen eine deutlich verbesserte Verdichtbarkeit und bei hohen Temperaturen eine deutlich verbesserte Wärmestandsfestigkeit auf, d.h. die erfindungsgemäßen Straßenbeläge sind weniger deformierbar. Ebenfalls verbessert sind die Werte für eluierbare Schadstoffe.

Die nachfolgenden Beispiele sollen die Erfindung näher erläutern, ohne sie einzuschränken.

### Beispiel 1:

Das Lackkoagulat (Mischung aus Primer-, Basis- und Klarlack zu gleichen Teilen, wie es üblicherweise in der Kunststoffteilelackierung (Automobilindustrie) anfällt, koaguliert mit Wachsdispersion) wird bei 100°C Produkttemperatur und leichtem Vakuum getrocknet und granuliert. Dieses Lackkoagulat enthält Polyurethane und Polyurethanbindemittel. Das Granulat wird vorzugsweise in Mengen von 10 bis 20 Gew.% dem heißen Bitumen bei ca. 140 bis 160°C zugesetzt. Unter ständigem Rühren wird diese Bitumenmischung wie üblich zu heißem, getrocknetem Gestein gegeben und der gewünschte Straßenbelag gemischt. Der resultierende Belag hatte eine deutlich verminderte Penetrationsneigung und zeigte bei hohen Temperaturen eine deutlich verbesserte Wärmestandsfestigkeit, d.h. er war weniger deformierbar. Ebenfalls verbessert wurden die Werte für eluierbare Schadstoffe.

### Beispiel 2:

Das Lackkoagulat (2-K-Klarlack, wie es üblicherweise in der Kunststoffteilelackierung (Automobilindustrie) anfällt, koaguliert mit Wachsdispersion) wird bei 120°C Produkttemperatur getrocknet und granuliert. Dieses Granulat wird in Mengen von 1 bis 7 Gew.% der Gesteins/Bitumenmischung im Asphaltmischer bei 160°C zugesetzt und homogenisiert. Es wurden sog. Marshall-Probenkörper hergestellt und untersucht. Diese zeigten ein geringeres Hohlraumvolumen und ein höhere Wärmestandfestigkeit als die Vergleichsproben ohne Lackkoagulatzusatz.

### Beispiel 3:

Das Lackkoagulat (Mischung wie in Beispiel 1) mit einem Wassergehalt von 5 bis 40 Gew.% wird mit Hilfe einer an sich bekannten Feststoffdosiereinrichtung in Mengen von 1 bis 20 Gew.% der Aufbruchasphaltkomponente, die etwa 4 bis 8 Gew.% Bitumen neben Füller und Gestein in verschiedenen Kömungen beinhaltet, zugeschlagen. Diese Mischung aus Aufbruchasphalt und Lackkoagulat wird in einem Röhrenofen auf etwa 160°C erwärmt. Bei diesem Prozeß wird das Lackkoagulat getrocknet und zusammen mit den alten Bitumenanteilen aufgelöst und polymerisiert. Bei der Vermischung mit neuem Material erfolgt eine Homogenisierung und die gewünschte Ausbildung des Netzwerks. Das Ergebnis ist eine Verbesserung der Deformationsergebnisse bei höheren Temperaturen und eine Verschiebung des Brechpunktes zu kälteren Temperaturen, im Vergleich zu Proben ohne Koagulatzusatz.

### Beispiel 4:

Das in Beispiel 1 verwendete Lackkoagulat wurde bei einem Wassergehalt von 5 bis 30 Gew.% der 170°C heißen Gestein/Füller/Bitumen-Mischung im Asphaltmischer in Mengen von 1 bis 7 Gew.%, bezogen auf die Gesamtmenge, zugegeben und 1 Minute homogenisiert. Die daraus hergestellten Straßenbeläge zeigen die in den Beispielen 1 bis 3 gezeigten Verbesserungen.

## Patentansprüche

1. Straßenbelag auf Bitumenbasis, **dadurch gekennzeichnet, daß** er neben den üblichen Bestandteilen Bitumen und Gestein Lackkoagulate mit thermisch, physikalisch oder chemisch aushärtbaren Lackbindemitteln enthält.

2. Straßenbelag gemäß Anspruch 1, **dadurch gekennzeichnet, daß** die Lackkoagulate als Lackbindemittel solche enthalten, die bei Lacken auf Basis von Melaminharz, Polyester, Alkydharz, Acrylat thermisch reagierend oder bei 2-K-Systemen wie Polyester, Polyol, Polyurethan mit entsprechenden Polyisocyanathärtern, oder in Epoxysystemen physikalisch oder chemisch härtend Verwendung finden.

3. Straßenbelag gemäß einem der Ansprüche 1 oder 2, **dadurch gekennzeichnet, daß** er Lackkoagulate in Mengen von 0,1 Gew.% bis 30 Gew.%, bezogen auf die Gesamtmenge, enthält.

4. Straßenbelag gemäß einem der vorhergehenden Ansprüche, **dadurch gekennzeichnet, daß** der organische Anteil im Lackkoagulat 30 bis 100 Gew.%, bezogen auf das Trockengewicht, ausmacht.

5. Straßenbelag gemäß einem der vorhergehenden Ansprüche, **dadurch gekennzeichnet, daß** er Lackkoagulate gemäß Anspruch 4 in Mengen von biszu 20 Gew.%, bezogen auf das Trockengewicht, enthält.

6. Verfahren zur Herstellung von Straßenbelägen gemäß einem der Ansprüche 1 bis 5, **dadurch gekennzeichnet, daß** der Bitumen/Gesteinsmischung Lackkoagulate mit thermisch, physikalisch oder chemisch aushärtbaren Lackbindemitteln bei Temperaturen von 140°C bis 220°C beigemischt wird.

7. Verfahren nach Anspruch 6, **dadurch gekennzeichnet, daß** dem Bitumen getrocknete Lackkoagulate in Mengen von 0,1 Gew.% bis 30 Gew.%, bezogen auf die Gesamtmenge, zugesetzt werden.

8. Verfahren nach Anspruch 6, **dadurch gekennzeichnet, daß** der heißen Bitumen/Gesteinsmischung Lackkoagulate in trockener oder wasserfeuchter Form in Mengen von 0,1 Gew.% bis 30 Gew.%, bezogen auf die Gesamtmenge, zugesetzt werden, wobei der Wassergehalt bis zu 60 Gew.% ausmachen kann.

9. Verfahren nach Anspruch 6, **dadurch gekennzeichnet, daß** die Lackkoagulate in wasserfeuchter Form dem Gestein vor der Trocknung in Mengen von 0,1 bis 30 Gew.%, bezogen auf die Gesamtmenge, zugesetzt werden, wobei der Wassergehalt bis zu 60 Gew.% ausmachen kann.

10. Verwendung von Lackkoagulaten mit thermisch, physikalisch oder chemisch aushärtbaren Lackbindemitteln als Zusatz von Straßenbelägen auf Bitumenbasis.

11. Verwendung von Lackkoagulaten gemäß Anspruch 10, **dadurch gekennzeichnet, daß** die Lackkoagulate als Lackbindemittel solche enthalten, die beispielsweise bei Lacken auf Basis von Melaminharz, Polyester, Alkydharz, Acrylat thermisch reagierend oder bei 2-K-Systemen wie Polyester, Polyol, Polyurethan mit entsprechenden Polyisocyanathärtern, oder in Epoxysystemen physikalisch oder thermisch härtend Verwendung finden.

## Claims

1. Bitumen-based road covering, characterized in that, in addition to the usual components bitumen and rock, it contains lacquer coagulates with thermally, physically or chemically hardenable lacquer binders.

2. Road covering according to claim 1,
characterized in that the lacquer coagulates contain, as lacquer binders, those which can be used with thermally reacting lacquers based on melamine resin, polyester, alkyd resin, acrylate, or with physically or chemically hardening two pot systems such as polyester, polyol, polyurethane with corresponding polyisocyanate hardeners, or in physically or chemically hardening epoxy systems.

3. Road covering according to one of claims 1 or 2, characterized in that it contains lacquer coagulates in quantities of 0.1% by weight to 30% by weight in relation to the total quantity.

4. Road covering according to one of the preceding claims, characterized in that the organic part in the lacquer coagulate constitutes 30 to 100% by weight in relation to the dry weight.

5. Road covering according to one of the preceding claims, characterized in that it contains lacquer coagulates according to claim 4 in quantities of up to 20% by weight in relation to the dry weight.

6. Method for the manufacture of road coverings according to one of claims 1 to 5, characterized in that lacquer coagulates with thermally, physically or chemically hardenable lacquer binders are added to the bitumen/rock mixture at temperatures of 140°C to 220°C.

7. Method according to claim 6, characterized in that dried lacquer coagulates are added to the bitumen in quantities of 0.1% by weight to 30% by weight in relation to the total quantity.

8. Method according to claim 6, characterized in that lacquer coagulates are added in dry or moist form to the hot bitumen/rock mixture in quantities of 0.1% by weight to 30% by weight in relation to the total quantity, with the water content being able to constitute up to 60% by weight.

9. Method according to claim 6, characterized in that the lacquer coagulates are added in moist form to the rock before the drying in quantities of 0.1 to 30% by weight in relation to the total quantity, with the water content being able to constitute up to 60% by weight.

10. Use of lacquer coagulates with thermally, physically or chemically hardenable lacquer binders as additive of road coverings on a bitumen base.

11. Use of lacquer coagulates according to claim 10, characterized in that the lacquer coagulates contain, as lacquer binders, those which can be used, for example, with lacquers based on thermally reacting melamine resin, polyester, alkyd resin, acrylate, or with physically or thermally hardening two pot systems such as polyester, polyol, polyurethane with corresponding polyisocyanate hardeners, or in physically or chemically hardening epoxy systems.

## Revendications

1. Revêtement routier à base de bitume, caractérisé en ce qu'il contient, outre les constituants habituels bitume et roche, des coagulats de laque renfermant des liants de laque durcissables thermiquement, physiquement ou chimiquement.

2. Revêtement routier selon la revendication 1, caractérisé en ce que les coagulats de laque contiennent comme liants de laque ceux qui trouvent une utilisation en réagissant thermiquement dans des laques à base de résine de mélamine, de polyester, de résine alkyde ou d'acrylate, ou en durcissant physiquement ou chimiquement dans des systèmes à deux constituants tels que polyester, polyol, polyuréthanne avec des durcisseurs polyisocyanates correspondants, ou dans des systèmes époxy.

3. Revêtement routier selon la revendication 1 ou 2, caractérisé en ce qu'il contient des coagulats de laque en une proportion de 0,1 % en poids à 30 % en poids, cette proportion étant rapportée à la quantité totale.

4. Revêtement routier selon l'une quelconque des revendications précédentes, caractérisé en ce que la partie organique du coagulat de laque représente 30 à 100 % en poids, ce pourcentage étant rapporté au poids à sec.

5. Revêtement routier selon l'une quelconque des revendications précédentes, caractérisé en ce qu'il contient des coagulats de laque selon la revendication 4, en une quantité représentant jusqu'à 20 % en poids, cette quantité étant exprimée en poids de produit sec.

6. Procédé de préparation de revêtements routiers selon l'une quelconque des revendications 1 à 5, caractérisé en ce que l'on ajoute au mélange de bitume et de roche, à des températures de 140°C à 220°C, des coagulats de laque renfermant des liants de laque durcissables thermiquement, physiquement ou chimiquement.

7. Procédé selon la revendication 6, caractérisé en ce que l'on ajoute au bitume des coagulats de laque séchés en une proportion de 0,1 % en poids à 30 % en poids, cette proportion étant rapportée à la quantité totale.

8. Procédé selon la revendication 6, caractérisé en ce que l'on ajoute au mélange chaud de bitume et de roche des coagulats de laque à l'état sec ou humide, en une proportion de 0,1 % en poids à 30 % en poids, cette proportion étant rapportée à la quantité totale, la teneur en eau pouvant atteindre jusqu'à 60 % en poids.

9. Procédé selon la revendication 6, caractérisé en ce que l'on ajoute les coagulats de laque à l'état humide aux roches avant le séchage, en une proportion de 0,1 à 30 % en poids, cette proportion étant rapportée à la quantité totale, la teneur en eau pouvant atteindre jusqu'à 60 % en poids.

10. Utilisation de coagulats de laque renfermant des liants de laque durcissables thermiquement, physiquement ou chimiquement, comme additif de revêtements routiers à base de bitume.

11. Utilisation de coagulats de laque selon la revendication 10, caractérisée en ce que les coagulats de laque contiennent comme liants de laque ceux qui trouvent une utilisation en réagissant thermiquement dans des laques à base de résine de mélamine, de polyester, de résine alkyde ou d'acrylate, ou en durcissant physiquement ou chimiquement dans des systèmes à deux constituants tels que polyester, polyol, polyuréthanne, avec des durcisseurs polyisocyanates correspondants, ou dans des systèmes époxy.
